## Europäisches Patentamt

## European Patent Office

## Office européen des brevets

(11) Veröffentlichungsnummer: **0 181 411
B1**

(12) # EUROPÄISCHE PATENTSCHRIFT

(45) Veröffentlichungstag der Patentschrift:
**24.05.89**

(51) Int. Cl.⁴: **G 01 M 13/02, F 16 C 11/06**

(21) Anmeldenummer: **84113244.2**

(22) Anmeldetag: **03.11.84**

(54) Anordnung zur Einleitung von Kräften in einen gemeinsamen Krafteinleitungspunkt.

(43) Veröffentlichungstag der Anmeldung:
**21.05.86 Patentblatt 86/21**

(45) Bekanntmachung des Hinweises auf die Patenterteilung:
**24.05.89 Patentblatt 89/21**

(84) Benannte Vertragsstaaten:
**DE FR GB**

(56) Entgegenhaltungen:
**EP-A- 0 072 278
EP-A- 0 114 327**

(73) Patentinhaber: **CARL SCHENCK AG,
Landwehrstrasse 55 Postfach 40 18, D-6100 Darmstadt
(DE)**

(72) Erfinder: **Zuber, Günter, Berliner Strasse 23,
D-6101 Messel (DE)**

(74) Vertreter: **Brand, Fritz, Dipl.-Ing., Carl Schenck AG
Patentabteilung Landwehrstrasse 55 Postfach 4018,
D-6100 Darmstadt (DE)**

ACTORUM AG

## Beschreibung

Die Erfindung betrifft eine Anordnung zur Einleitung von mindestens zwei, insbesondere senkrecht zueinander wirkenden Kräften in einen gemeinsamen Krafteinleitungspunkt eines zu prüfenden Bauteils, wobei die Kräfte über Krafteinleitungselemente übertragen werden.

Bei einer bekannten Anordnung zur im wesentlichen punktförmigen Einleitung von in drei Raumrichtungen veränderbaren Kräften oder Verformungen in ein Bauteil (DE-PS 20 48 050) werden zur Krafteinleitung im wesentlichen senkrecht zueinander angeordnete Schiebestangen verwendet, die über hydraulische Zylinder betätigt werden. Bei der Krafteinleitung können sich jedoch Verschiebungen an den Einzelelementen ergeben, so dass die in verschiedenen Richtungen wirkenden Kräfte an unterschiedlichen Punkten angreifen. Die Krafteinleitung an einem Punkt ist daher nicht mehr gewährleistet und es können Fehler bei der Kraftübertragung und störende Biegebeanspruchungen auftreten.

Weiterhin ist es aus der EP-A2-114 327 bekannt, dicht beieinander angeordnete Kugelgelenke für eine derartige Krafteinleitung zu verwenden.

Aufgabe der vorliegenden Erfindung ist es, eine verbesserte Anordnung zur Einleitung von Kräften in einen gemeinsamen Krafteinleitungspunkt eines zu prüfenden Bauteils zu schaffen. Hierbei soll sich der theoretische bzw. konstruktiv festgelegte Krafteinleitungspunkt auch bei Bewegungen des Prüflings nicht ändern. Diese Aufgabe wird durch die im Patentanspruch angegebenen Merkmale gelöst. Die abhängigen Ansprüche erfassen Ausgestaltungen der Erfindung.

Durch die Verwendung von ineinander angeordneten Kugelgelenken bleibt der konstruktiv festgelegte Krafteinleitungspunkt unabhängig von den wirkenden Kräften und der Bewegung des zu prüfenden Bauteils erhalten. Auch eine Veränderung der Kraftangriffswinkel ergibt keine Veränderung der Lage des Krafteinleitungspunktes und es werden keine unerwünschten Momente am Prüfling erzeugt.

Die Erfindung wird an zwei Ausführungsbeispielen in den Zeichnungen dargestellt und in der Beschreibung näher erläutert. Die Zeichnungen zeigen in

Figur 1 eine Anordnung mit drei ineinander angeordneten Kugelgelenken,

Figur 2 eine Seitenansicht der Anordnung nach Figur 1,

Figur 3 eine Anordnung mit zwei ineinander angeordneten Kugelgelenken.

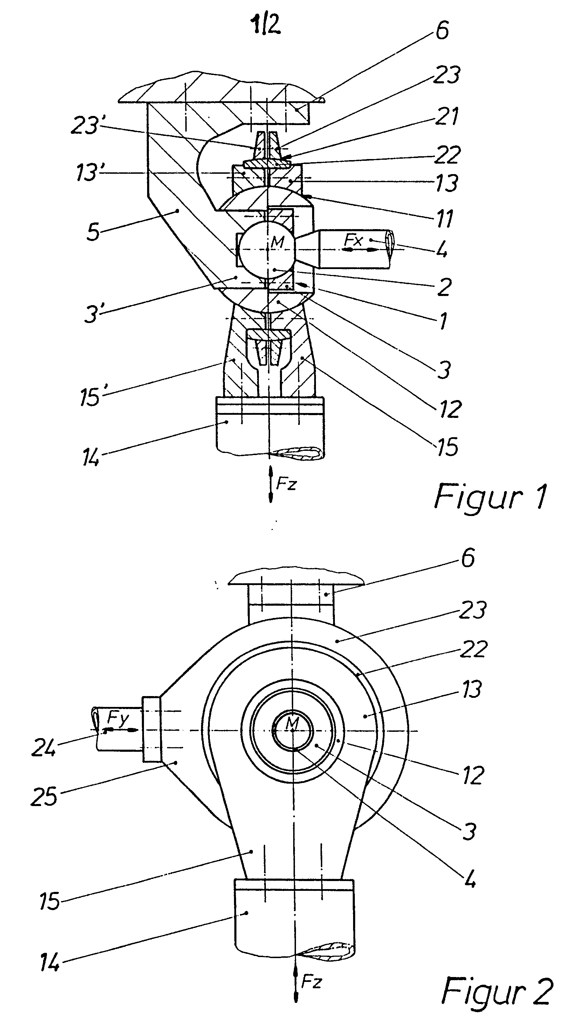

In Figur 1 besteht das erste (innere) Kugelgelenk 1 aus einer Gelenkkugel 2 und einer ersten Gelenkschale. Diese ist, wie die übrigen Gelenkschalen der Anordnung, in einer Mittelebene, die durch den Krafteinleitungspunkt M geht und senkrecht zur Papierebene steht, wie dargestellt geteilt und wird durch die beiden Schalenhälften bzw. Lagerschalen 3 und 3' gebildet.

Die Gelenkkugel 2 ist mit einem Krafteinleitungselement 4 verbunden, über das im dargestellten Ausführungsbeispiel eine horizontale Kraft $\pm F_x$, die durch den Krafteinleitungspunkt M geht, übertragen werden kann. Die Lagerschale 3' ist Teil eines Zwischenelements 5, über das die Gelenkanordnung mit dem zu prüfenden Bauteil, z.B. einer Radachse oder einer Fahrzeugaufhängung, fest verbindbar ist. Die Lagerschale 3, die einen Durchbruch für das Krafteinleitungselement 4 an der Gelenkkugel 2 aufweist, ist in geeigneter Weise mit der Lagerschale 3' verbunden, z.B. verschraubt.

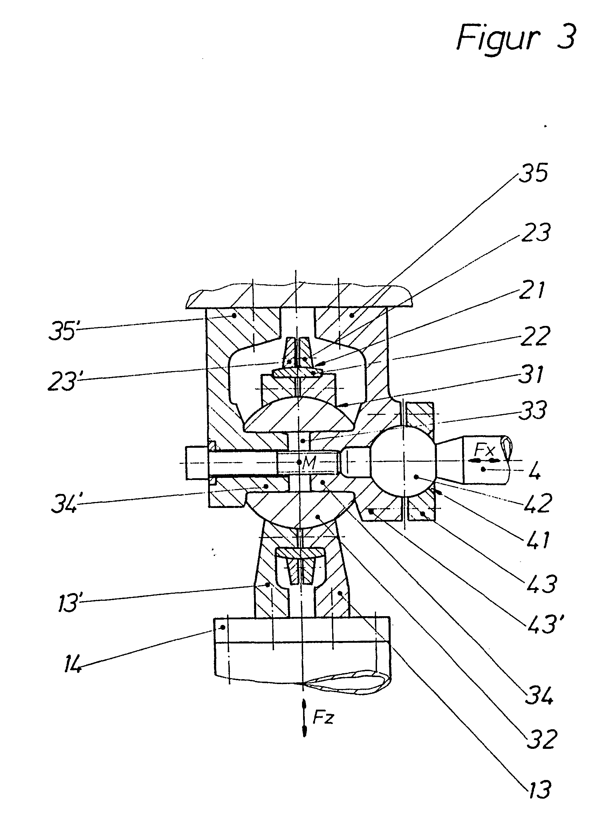

Die Ausbildung des Zwischenelements 5 richtet sich nach seinem Einsatzzweck. Seine Form und Anordnung ist an das zu prüfende Bauteil angepasst. Im dargestellten Ausführungsbeispiel weist es einen Flansch 6 auf, an dem es von unten mit dem nicht dargestellten Prüfling verschraubt ist. Es kann jedoch auch z.B. seitlich (in der Zeichnung links) oder an anderer geeigneter Stelle mit dem Prüfling verbunden und entsprechend ausgebildet sein (siehe auch Figur 3).

An der Lagerschale 3' ist ein zweites (mittleres) Kugelgelenk 11 mit einer Gelenkkugel in Form eines ringförmigen Kugelelements oder Kugelrings 12 und einer zweiten Gelenkschale mit Lagerschalen 13, 13' angeordnet. Der Kugelring 12 ist in geeigneter Weise fest mit der Lagerschale 3' verbunden. Die Lagerschalen 13, 13' weisen an einer Seite Anschlussstege 15, 15' für die Verbindung mit einem Kratteinleitungselement 14 auf, über das z.B. eine in vertikaler Richtung wirkende und durch den Krafteinleitungspunkt M gehende Kraft $\pm F_z$ übertragen werden kann. Die Anschlussstege 15, 15' sind so ausgebildet, dass zwischen ihnen die Lagerelemente eines weiteren Lagers hindurchgeführt werden können bzw. dass sie diese Elemente umgreifen. Die Lagerschalen 13, 13' sind fest miteinander verbunden, z.B. verschraubt.

Ein drittes (äusseres) Kugelgelenk 21 der dargestellten Anordnung ist ähnlich aufgebaut wie das mittlere Kugelgelenk 11. Am äusseren Umfang der Lagerschalen 13, 13' ist ein Kugelring 22 in geeigneter Weise befestigt. Er kann, wie dargestellt, in die Lagerschalen eingelassen sein. Auf dem Kugelring sind Lagerschalen 23, 23' angeordnet, die zusammen mit dem Kugelring das dritte (äussere) Kugelgelenk bilden. Die Lagerschalen 23, 23' weisen Anschlussstege 25, 25' auf (siehe Figur 2), mit denen sie an einem Krafteinleitungselement 24 befestigt sind. Mit dem Krafteinleitungselement kann z.B. eine senkrecht zur Papierebene der Figur 1 wirkende Kraft $\pm F_y$ durch den Krafteinleitungspunkt M übertragen werden.

Figur 2 stellt eine Seitenansicht der Lageranordnung nach Figur 1 dar. In der Zeichnung ist der Anschlussteg 25 der Lagerschale 23 zum Anschluss des Krafteinleitungselements 24 erkennbar.

Einzelheiten zur Lagereinstellung sowie zur Schmierung und Abdichtung der Lager sind der Übersichtlichkeit halber in den Figuren nicht dargestellt.

In Figur 3 ist eine erfindungsgemässe Kugelgelenkanordnung dargestellt, bei der die Gelenkkugel eines ersten (inneren) Gelenks 31 fest mit dem zu prüfenden Bauteil verbunden ist. Die Gelenkkugel 32 des Gelenks weist eine Durchgangsbohrung 33 auf, in die zwei Zapfen 34, 34' eines geteilten Zwischenelements 35, 35' eingreifen. Das Zwischenelement ist in geeigneter Weise mit dem zu prüfenden Bauteil verbunden, z.B. verschraubt.

Die Gelenkkugel 32 bildet mit einer ersten Gelenkschale, die aus den Lagerschalen 13, 13' besteht, das erste (innere) Kugelgelenk 31. Die Lagerschalen 13, 13' dieses Gelenks sowie ein zweites (äusseres) Kugelgelenk 21 mit dem Kugelring 22 und einer zweiten Gelenkschale mit den Lagerschalen 23, 23' entsprechen in der Ausbildung und Anordnung dem Ausführungsbeispiel nach Figur 1.

Das Zwischenelement 35 ist in Figur 3 als Gelenkstelle für ein weiteres Kugelgelenk 41 ausgebildet, dessen Mittelpunkt nicht mit dem Mittelpunkt der beiden anderen Kugelgelenke zusammenfällt und das damit ausserhalb des theoretischen Krafteinleitungspunktes liegt. Im Zwischenelement 35 ist hierzu eine Lagerschale 43' vorgesehen, die zusammen mit der Gelenkkugel 42 und einer Lagerschale 43 das weitere Kugelgelenk bildet. Die Gelenkkugel 42 ist in geeigneter Weise mit einem Krafteinleitungselement verbunden, mit dem z.B. entsprechend dem Krafteinleitungselement 4 in Figur 1 eine horizontale Kraft ± $F_x$ in die Gelenkanordnung eingeleitet werden kann.

Bei der Ausbildung der Kugelelemente, Gelenkschalen, Anschlussstege und des Zwischenelements sind eine Reihe konstruktiver Varianten möglich. Bei den dargestellten Anordnungen können z.B. die Gelenkschalen bzw. Lagerschalen 3/3', 13/13' an ihren Aussenseiten kugelförmig ausgebildet sein und damit auch die Kugelelemente bzw. Kugelringe 12, 22 bilden. An den Aussenseiten der Gelenkschale 23/23' können weitere Gelenke angeordnet werden.

**Patentansprüche**

1. Anordnung zur Einleitung von mindestens zwei, insbesondere senkrecht zueinander wirkenden Kräften in einen gemeinsamen Krafteinleitungspunkt (M) für ein zu prüfendes Bauteil, beispielsweise eine Radachse oder eine Fahrzeugaufhängung, wobei die Kräfte jeweils über ein Krafteinleitungselement (4, 14, 24) übertragen werden, dadurch gekennzeichnet, dass eine der Anzahl der Kräfte entsprechende Anzahl ineinander angeordneter Kugelgelenke (1, 11, 21, 31) mit Gelenkkugeln (2, 12, 22, 32) und Gelenkschalen (3/3', 13/13', 23/23') vorgesehen ist, deren gemeinsamer Mittelpunkt (M) den Krafteinleitungspunkt bildet, und dass eine Gelenkkugel (32) oder eine Gelenkschale (3') mit dem zu prüfenden Bauteil verbunden ist, und dass jedes Krafteinleitungselement (4, 14, 24) mit einer Gelenkkugel (2, 32) oder einer Gelenkschale (13, 13') verbunden ist.

2. Anordnung nach Anspruch 1, gekennzeichnet durch ein erstes Kugelgelenk (1) mit einer Gelenkkugel (2) und einer ersten Gelenkschale (3/3'), wobei die Gelenkkugel (2) auf einer Seite mit einem Krafteinleitungselement (4) und die erste Gelenkschale (3) auf der gegenüberliegenden Seite über ein Zwischenelement (5) mit einem zu prüfenden Bauteil verbunden ist, ein zweites Kugelgelenk (11) mit einem Kugelelement (12) und einer zweiten Gelenkschale (13/13'), wobei das Kugelelement (12) fest mit der ersten Gelenkschale (3') und die zweite Gelenkschale (13/13') mit einem Krafteinleitungselement (14) verbunden ist.

3. Anordnung nach Anspruch 2, gekennzeichnet durch ein drittes Kugelgelenk (21), mit einem weiteren Kugelelement (22) und einer dritten Gelenkschale (23/23'), wobei das weitere Kugelelement (22) fest mit der zweiten Gelenkschale (13/13') und die dritte Gelenkschale (23/23') mit einem Krafteinleitungselement (24) verbunden ist.

4. Anordnung nach Anspruch 1, gekennzeichnet durch ein erstes Kugelgelenk (31), dessen Gelenkkugel (32) eine Durchgangsbohrung (33) aufweist, in die beidseitig ein bügelförmiges Zwischenelement (35/35') eingreift, das mit dem zu prüfenden Bauteil verbunden ist, eine erste Gelenkschale (13/13'), die mit einem Krafteinleitungselement (14) verbunden ist, ein zweites Kugelgelenk (21), mit einem Kugelelement (22) und einer zweiten Gelenkschale (23/23'), wobei das Kugelelement (22) fest mit der ersten Gelenkschale (13/13') und die zweite Gelenkschale (23/23') mit einem Krafteinleitungselement (24) verbunden ist.

5. Anordnung nach Anspruch 4, dadurch gekennzeichnet, dass an dem bügelförmigen Zwischenelement (35/35') ein weiteres, ausserhalb des Krafteinleitungspunktes (M) befindliches Kugelgelenk (41) angeordnet ist, wobei das bügelförmige Zwischenelement (35/35') an der Gelenkstelle des weiteren Kugelgelenks (41) als Gelenkschale (43') ausgebildet ist, und dass die Gelenkkugel (41) dieses Gelenks mit einem Krafteinleitungselement (4) verbunden ist.

6. Anordnung nach einem der vorhergehenden Ansprüche, dadurch gekennzeichnet, dass die Gelenkschalen (3/3', 13/13', 23/23') in einer Mittelebene durch den Krafteinleitungspunkt (M) geteilt und als miteinander verbundene Lagerschalen (3/3', 13/13', 23/23') ausgebildet sind.

7. Anordnung nach einem der vorhergehenden Ansprüche, dadurch gekennzeichnet, dass die Gelenkschalen (13/13', 23/23') Anschlussstege (15,15') für die Verbindung mit den Krafteinleitungselementen (14, 24) aufweisen.

8. Anordnung nach einem der vorhergehenden Ansprüche, dadurch gekennzeichnet, dass die Gelenkkugeln oder Kugelelemente (12, 22) als Kugelringe ausgebildet sind.

9. Anordnung nach einem der vorhergehenden Ansprüche, dadurch gekennzeichnet, dass die Lagerschalen (3/3', 13/13') an ihrer Aussenseite kugelförmig ausgebildet sind.

## Revendications

1. Dispositif pour appliquer au moins deux forces agissant en particulier perpendiculairement l'une par rapport à l'autre, en un point commun (M) d'application de force pour une partie constructive à contrôler, par exemple un essieu de roue ou une suspension de véhicule, les forces étant à cette occasion chaque fois transmises par des éléments d'application de force (4, 14, 24), caractérisé en ce qu'en nombre correspondant à celui des forces, sont prévues des articulations sphériques (1, 11, 21, 31) à sphères d'articulation (2, 12, 22, 32) et coquilles d'articulation (3/3', 13/13', 23/23'), articulations situées les unes dans les autres, dont le point central (M) commun constitue le point d'application de force, et en ce qu'une sphère d'articulation (32) ou une coquille d'articulation (3') sont reliées à la partie constructive à essayer, et en ce que chaque élément d'application de force (4, 14, 24) est relié à une sphère d'articulation (2, 32) ou une coquille d'articulation (13, 13').

2. Dispositif selon la revendication 1, caractérisé en ce qu'une première articulation sphérique (1) est reliée une sphère d'articulation (2) et à une première coquille de palier (3/3'), à l'occasion de quoi la sphère d'articulation (2) est reliée sur un côté à l'élément d'application de force (4) et la première coquille d'articulation (3) est reliée sur le côté opposé à la partie constructive à essayer, par un élément intermédiaire (5), une deuxième articulation sphérique (11) est reliée à un élément sphérique (12) et à une deuxième coquille d'articulation (13/13'), à l'occasion de quoi l'élément sphérique (12) est rigidement relié à la première coquille d'articulation (3') et la deuxième coquille d'articulation (13/13') est reliée à un élément d'application de force (14).

3. Dispositif selon la revendication 2, caractérisé en ce qu'une troisième articulation sphérique (21) est reliée à un élément sphérique (22) supplémentaire et à une troisième coquille d'articulation (23/23'), à l'occasion de quoi l'élément sphérique (22) supplémentaire est rigidement relié à la deuxième coquille d'articulation (13/13') et la troisième coquille d'articulation (23/23') est reliée à un élément d'application de force (24).

4. Dispositif selon la revendication 1, caractérisé par:
— une première articulation sphérique (31), dont la sphère d'articulation (32) présente un alésage traversant (33), dans lequel un élément intermédiaire (35/35') en forme d'étrier est en prise des deux côtés et est relié à la partie constructive à essayer,
— une première articulation sphérique (13/13'), qui est reliée à un élément d'application de force (14),
— une deuxième articulation sphérique (21), avec un élément sphérique (22) et une deuxième coquille d'articulation (23/23'), à l'occasion de quoi l'élément sphérique (22) est rigidement relié à la première coquille d'articulation (13/13') et la deuxième coquille d'articulation (23/23') est reliée à un élément d'application de force (24).

5. Dispositif selon la revendication 4, caractérisé en ce qu'une articulation sphérique (31) supplémentaire, se trouvant hors du point d'application de force (M) est disposée sur l'élément intermédiaire en forme d'étrier (35/35'), à l'occasion de quoi l'élément intermédiaire en forme d'étrier (35/35') est réalisé sous forme de coquille d'articulation (43') sur le point d'articulation de l'articulation sphérique supplémentaire (41), et en ce que cette articulation est reliée à un élément d'application de force (4).

6. Dispositif selon l'une des revendications précédentes, caractérisé en ce que les coquilles d'articulation (3/3', 13/13', 23/23') sont subdivisées dans un plan médian par le point d'application de force (M) et sont réalisées sous forme de coquilles de palier (3/3', 13/13', 23/23') reliées ensemble.

7. Dispositif selon l'une des revendications précédentes, caractérisé en ce que les coquilles de palier (13/13', 23/23') présentent des nervures de raccordement (15, 15') pour la liaison aux éléments d'application de force (14, 24).

8. Dispositif selon l'une des revendications précédentes, caractérisé en ce que les sphères d'articulation ou les éléments d'articulation (12, 22) sont réalisées sous forme d'anneaux sphériques.

9. Dispositif selon l'une des revendications précédentes, caractérisé en ce que les coquilles de palier (3/3', 13/13') sont réalisées en forme de sphère sur leur côté extérieur.

## Claims

1. An arrangement for the application of at least two forces, in particular acting at right angles to each other, at a common force application point (M) for a component to be tested, for example a wheel axle or a vehicle suspension, wherein the forces are transferred in each case via a force application element (4, 14, 24), characterized in that a number of ball-and-socket joints (1, 11, 21, 31) corresponding to the number of the forces, which joints are arranged inside each other, is provided with spherical parts (2, 12, 22, 32) and joint shells (3/3', 13/13', 23/23'), the common centre point (M) of which forms the force application point, and in that one spherical part (32) or one joint shell (3') is connected to the part to be tested, and in that each force application element (4, 14, 24) is connected to one spherical part (2, 32) or one joint shell (13, 13').

2. An arrangement according to Claim 1, characterized by a first ball-and-socket joint (1) with a spherical part (2) and a first joint shell (3/3'), wherein the spherical part (2) is connected on one side to a force application element (4) and the first joint shell (3) on the opposite side is connected via an intermediate element (5) to a component to be tested, a second ball-and-socket joint (11) with a spherical element (12) and a second joint shell (13/13'), wherein the spherical element (12) is rigidly connected to the first joint shell (3'), and the second joint shell (13/13') to a force application element (14).

3. An arrangement according to Claim 2, characterized by a third ball-and-socket joint (21), with a further spherical element (22) and a third joint shell (23/23') wherein the further spherical element (22) is rigidly connected to the second joint shell (13/13'), and the third joint shell (23/23') to a force application element (24).

4. An arrangement according to Claim 1, characterized by a first ball-and-socket joint (31), the spherical part of which has a bore (33) in which there engages on both sides a stirrup-shaped intermediate element (35/35') which is connected to the component to be tested, a first joint shell (13/13') which is connected to a force application element (14), a second ball-and-socket joint (21), with a spherical element (22) and a second joint shell (23/23'), wherein the spherical element (22) is rigidly connected to the first joint shell (13/13') and the second joint shell (23/23') is connected to a force application element (24).

5. An arrangement according to Claim 4, characterized in that a further ball-and-socket joint (41) located outside the force application point (M) is arranged on the stirrup-shaped intermediate element (35/35'), wherein the stirrup-shaped intermediate element (35/35'), is constructed as a joint shell (43') at the joint part of the further ball-and-socket joint (41), and in that the spherical part (41) of this joint is connected to a force application element (4).

6. An arrangement according to one of the preceding Claims, characterized in that the joint shells (3/3', 13/13', 23/23') are divided in a central plane by the force application point (M) and are constructed as bearing shells (3/3', 13/13', 23/23') connected to each other.

7. An arrangement according to one of the preceding Claims, characterized in that the joint shells (13/13', 23/23') have connecting webs (15, 15') for connection to the force application elements (14, 24).

8. An arrangement according to one of the preceding Claims, characterized in that the spherical parts or spherical elements (12, 22) are constructed as ball races.

9. An arrangement according to one of the preceding Claims, characterized in that the bearing shells (3/3', 13/13') are constructed to be spherical on their outer side.

1/2

Figur 1

Figur 2

Figur 3